# EUROPEAN PATENT SPECIFICATION

(11) **EP 3 114 942 B1**
(45) Date of publication and mention of the grant of the patent: **21.02.2018**
(21) Application number: 15002048.5
(22) Date of filing: 08.07.2015
(51) Int. Cl.: A23G 1/00, A23G 1/32, A23G 1/02, A23G 1/30

(54) **COCOA PRODUCTS BASED ON UNFERMENTED COCOA BEANS AND METHODS FOR PREPARING THE SAME**
KAKAOPRODUKTE AUF BASIS VON NICHT FERMENTIERTEN KAKAOBOHNEN UND VERFAHREN ZUR HERSTELLUNG DAVON
PRODUITS À BASE DE CACAO SUR LA BASE DE FÈVES DE CACAO NON FERMENTÉES ET PROCÉDÉS DE PRÉPARATION DE CEUX-CI

(43) Date of publication of application: 11.01.2017
(60) Divisional application: 17001950.9
(73) Proprietor: ODC Lizenz AG, 6370 Stans (CH)
(72) Inventor: HÜHN, Tilo, 8824 Schönenberg (CH)
(74) Representative: Grünecker Patent- und Rechtsanwälte PartG mbB

(56) References cited:
- WO-A1-2014/130539
- WO-A2-2010/073117
- GB-A- 622 628
- US-A1- 2006 257 547

## Description

### FIELD OF INVENTION

This invention relates to methods and/or techniques for the production of chocolate or chocolate-like products on the basis of unfermented cocoa beans, wherein the products exhibit reduced bitterness and astringency and at the same time comprise high amounts of nutritionally beneficial and useful components of the cocoa fruit, such as e.g. polyphenols, antioxidants, vitamins and/or sugars.

In certain embodiments, this invention relates to the processing of unfermented cocoa beans and optionally cocoa pulp/mucilage for the manufacturing of a cocoa product construction kit as well as chocolate or chocolate-like products comprising high amounts of nutritionally beneficial and useful components of the cocoa fruit, such as e.g. polyphenols, antioxidants, vitamins and/or sugars.

### BACKGROUND OF THE INVENTION

Cocoa (*Theobroma cacao L.*) is known as an important source of healthy ingredients, such as e. g. minerals, vitamins, polyphenols (especially catechins, anthocyanidins and proanthocyanidins), and antioxidants such as flavonoids, which are inter alia physiologically active in the reduction of oxidative stress, inhibition of low-density lipoproteins (LDL) oxidation and platelet aggregation, and are acting as vasodilators in blood vessels.

However, during conventional processing of cocoa beans in the manufacture of cocoa-based foodstuffs, which involves fermentation and drying/roasting at high temperatures, substantial amounts of polyphenols, antioxidants, and/or vitamins are lost when compared to their contents in raw cocoa beans. A few variants of such conventional methods are disclosed in US 2006/257547 A1 and GB 622 628 A.

A typical cocoa bean processing procedure begins with the harvest of the cocoa pods, followed by careful removal of the cocoa beans. Thereafter, the cocoa beans are fermented and dried. As with most organic material, fermentation of cocoa begins almost immediately upon exposure to air. Spores from naturally occurring yeasts settle on the sugary beans and start to split the sugar into carbon dioxide, aroma and alcohol, the latter being further converted into acetic acid by means of microbial activities provided by bacteria. At the final stage of this process (in the following referred to as "natural fermentation process"), germ within the cacao bean is inactivated by the presence of alcohol, acetic acid and the heat generated by said microbial activities, resulting in a release of enzymes capable of reducing astringency within the bean, which are believed to be important to the development of the chocolate flavor. Typically, this natural cocoa fermentation process being spontaneously induced by microbial activities takes place during about two or more days until the microbial activities are inhibited by an excess of acetic acid and/or heat being caused by said microbial activities. Since much of the acetic acid is left within the beans after the fermentation is complete, it has to be removed from the beans in order to avoid sour and bitter flavors in the final cocoa product caused by the presence of acetic acid. Conventionally, the concentration of acetic acid is reduced during a roasting step at typically 70 to 180°C, which inevitably leads to a reduction of desirable healthy cocoa ingredients.

As an alternative to the inhibition of germination of cocoa beans by natural or spontaneous cocoa fermentation, the inhibition can also be brought about by certain physical and/or chemical pre-treatments applied to freshly harvested cocoa beans shortly after removal of the beans from the pods. Thereby, microbial fermentation may be avoided in order to reduce the variation in flavor and taste profile in the final cocoa products due to lack of control over the natural fermentation process. Such a pre-treatment typically involves incubation of freshly harvested cocoa beans at an elevated temperature, e.g. at a temperature of between 25 and 70 °C for less than 24 hours, as is disclosed in US patent US 8,501,256 B2. WO 2014/130539 A1 discloses an incubation process, wherein unfermented cocoa beans are incubated in ethanolic solution at a temperature of less than 55°C for 24 to 96 h.

However, the taste characteristics of unfermented and unroasted bean products are typically described as bitter, unpalatable, and being accompanied with a high level of astringency mainly due to the presence of catechins (which include epicatechin, catechin, procyanidin B2, procyanidin B5 and procyanidin C1) and amino acids (T. Stark et al., J. Agric. Food Chem. 2005, 53, 5407-5418), so that in order to produce a cocoa product with an acceptable flavor, cocoa product manufacturers have to either subject unfermented and/or incubated beans to an extensive heat treatment (such as in a drying and/or roasting step, which is usually carried out at about 100 to 150°C) to reduce the content of the bitter and astringent components (which is inevitably accompanied by the loss nutritionally beneficial and useful components of the cocoa fruit), or blend unfermented and/or incubated beans with fermented beans to achieve a compromise between taste quality and health-inducing effects.

WO 2010/073117 discloses a method for processing cocoa beans comprising the formation of a suspension comprising cocoa beans or nibs and water, wet grinding the suspended beans or nibs, heating the suspension, and decanting the same such that said suspension is separated into a water phase, a fat phase and a solid phase, in order to avoid liquefaction of the cocoa fat and formation of a chocolate liqueur during mechanical processing.

However, the problem of providing a method for processing cocoa beans which allows to manufacture cocoa products that are characterized by a pleasant taste and at the same time comprise favorably high amounts of nutritionally beneficial and valuable components of the unfermented cocoa fruit, such as e.g. polyphenols, antioxidants, vitamins and/or sugars, has hitherto not been adequately addressed.

The present invention has been made in view of the above enumerated drawbacks and/or desires for improvements in the art.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method for processing unfermented cocoa beans, comprising the steps of: adding water to said unfermented cocoa beans to form a suspension; wet grinding said suspension; subjecting said suspension to a heat treatment at a temperature of 70°C or less; separating the suspension into a water phase (heavy phase), a fat phase (light phase) and a solid phase, said fat phase comprising cocoa butter as a major component and solids and/or water as minor components and said solid phase comprising cocoa powder and water; and separately processing the three phases, which optionally comprises: separating cocoa butter from the fat phase, separating cocoa powder from the solid phase, and separating cocoa aroma and a polyphenolic powder from at least the water phase; wherein said unfermented cocoa beans are not predried; and wherein said unfermented cocoa beans have been subjected to an incubation step prior to step (a).

A further aspect of the present invention is the provision of a construction kit for chocolate or chocolate-like products, comprising the cocoa butter, cocoa powder, polyphenolic powder and cocoa aroma extracts obtained by the processing method as described above.

In another aspect, the present invention provides a method for producing chocolate or chocolate-like products comprising the steps of: adding water to unfermented cocoa beans to form a suspension; wet grinding said suspension; subjecting said suspension to a heat treatment at a temperature of 70°C or less; separating the suspension into three phases, i.e. a water phase (heavy phase), a fat phase (light phase) and a solid phase, said fat phase comprising cocoa butter as a major component and solids and/or water as minor components and said solid phase comprising cocoa powder and water; and separately processing the three phases, which comprises: separating cocoa butter from the fat phase, separating cocoa powder from the solid phase, and separating cocoa aroma and a polyphenolic powder from at least the water phase; recombining the cocoa aroma extract with the cocoa butter extract; mixing the recombined extracts with said cocoa powder extract, said polyphenolic powder extract and/or milk powder; and conching said mixture; wherein said unfermented cocoa beans are not predried; and wherein said unfermented cocoa beans have been subjected to an incubation step prior to step (a).

### BRIEF DESCRIPTION OF THE DRAWINGS

FIG. 1 schematically illustrates the method for processing the fermented cocoa beans up to the provision of a cocoa product construction kit, as well as the following method of manufacturing chocolate according to the subject invention.
FIG. 2 schematically illustrates an exemplary treatment of the water phase upon phase separation.

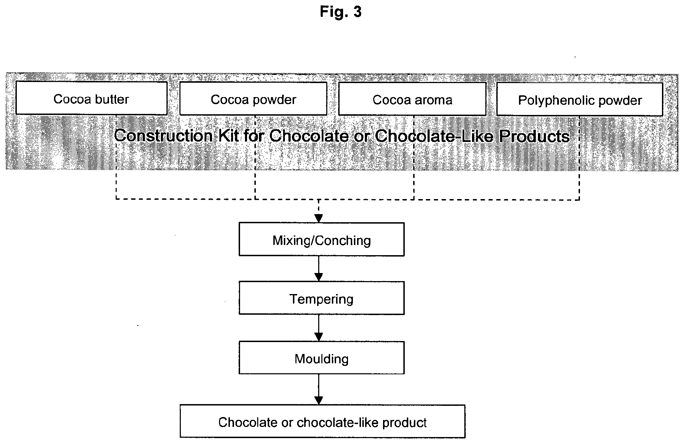

FIG. 3 schematically illustrates the method of manufacturing chocolate or chocolate-like products.
FIG. 4A schematically illustrates an exemplary method for preparing dark chocolate/milk chocolate using the fractions obtained after separation and processing of the fat, solid and water phases.
FIG. 4B schematically illustrates an exemplary method for preparing white chocolate using the fractions obtained after separation and processing of the fat, solid and water phases.
FIG. 4C schematically illustrates an exemplary method for preparing a chocolate or chocolate-like product with 100% cocoa using the fractions obtained after separation and processing of the fat, solid and water phases and cocoa pulp/mucilage as a natural sweetener.

### DETAILED DESCRIPTION OF THE INVENTION

For a more complete understanding of the present invention, reference is now made to the following description of the illustrative embodiments thereof:

### Method for Processing Unfermented Cocoa Beans

The method for processing unfermented cocoa beans according to a first embodiment of the present invention is generally characterized by the steps of: (a) adding water to said unfermented cocoa beans to form a suspension; (b) wet grinding said suspension; subjecting said suspension to a heat treatment at a temperature of 70°C or less; (c) separating the suspension into a water phase (heavy phase), a fat phase (light phase) and a solid phase, said fat phase comprising cocoa butter as a major component and solids and/or water as minor components and said solid phase comprising cocoa powder and water; and (d) separately processing the three phases, which optionally comprises: separating cocoa butter from the fat phase, separating cocoa powder from the solid phase, and separating cocoa aroma and a polyphenolic powder from at least the water phase ; wherein said unfermented cocoa beans are not predried; and wherein said unfermented cocoa beans have been subjected to an incubation step prior to step (a).

The expression "fermentation" generally refers to any activity or process involving enzymatic or metabolic decomposition (digestion) of organic materials by microorganisms, and encompasses both anaerobic and aerobic processes, as well as processes involving a combination or succession of one or more anaerobic and/or aerobic stages. The terms "unfermented", as used herein, refers to the fermentation degree of the cocoa beans. As is known by those skilled in the art, the degree of fermentation is denoted by the fermentation index (cf. Shamsuddin and Dimick, Qualitative and Quantitative Measurements of Cacao Bean Fermentation, in "Proceedings of the Cacao Biotechnology Symposium", Ed. P. S. Dimick, p. 55-74, The Pennsylvania State University, 1986). In general, the fermentation index of unfermented beans is less than 0.5.

The unfermented cocoa beans may have undergone a number of processing steps prior to being used for the initial step (a) of adding water, a few of which will be explained in the following:

In the fruit pod of *Theobroma cacao,* typically about 30 to 50 fruit seeds (i.e. cocoa beans) are surrounded by pulp and mucilage inside the pods. After the pods are harvested and opened mechanically or manually, which is preferably carried out in a sanitary facility, the cocoa beans are separated from the shell of the cocoa fruit.

Depending on the desired taste characteristics, the unfermented cocoa beans may be used in method step (a) in a depulped form or together with a part of or the entire pulp and mucilage contained in the pod.

The depulping of the cocoa beans may be carried out manually or mechanically. In a preferred embodiment, the pulp and mucilage is separated from the beans by using a mechanical separation device. In a further preferred embodiment, the cacao beans are separated from the pulp and mucilage by a paddle separator having a cylindrical screen with a rotating central axle on which paddle blades are affixed, wherein the blades sweep around the cylindrical screen and pulp and mucilage is sieved through the cylindrical sieve without causing damage to the cocoa beans. An exemplary mechanical separator which may be used for this purpose is known from US 2013/0316056 A1. The advantage of such a mechanical separation is that in a short processing time a high separation yield may be achieved, which allows a maximum amount of the pulp and mucilage to be reintroduced into the intermediate products and/or extracts during the further steps of the methods of the present invention, which will be explained in further detail below.

In a preferred embodiment, the cocoa pulp and mucilage obtained in the depulping step is processed separately from the unfermented cocoa beans and subsequently added to the suspension before or during steps (a), (b), (c) or (d). In an alternatively preferred embodiment, the pulp may be re-introduced at a later stage as a natural sweetener, so that advantage is taken of its relatively high sugar content. Advantageously, said approaches allow a maximum amount of the nutritionally beneficial components of the pulp and mucilage to be reintroduced into the intermediate products, extracts and final cocoa product and allow a variable fine tuning of the flavors in the extracts and the final product. The pulp and mucilage to be reintroduced may be derived from the same cultivar as the cocoa beans, which may be advantageous e.g. if the extracts and/or the final cocoa product is intended to be a pure-origin product. Alternatively, the pulp may be derived from a different cultivar than the cocoa beans or be a blend of different cultivars.

In a preferred embodiment, the separate pre-processing of the cocoa pulp and mucilage obtained in the depulping step may comprise mechanical and/or chemical separation and removal of undesired components. Such undesired components may comprise residual shell components and compounds contributing to an overly bitter, acidic and/or unpalatable taste, for example. In a further preferred embodiment, the separate processing of the cocoa pulp and mucilage obtained in the depulping step comprises neutralizing and/or removing acidic components, such as e.g. citric acid and/or acetic acid. Advantageously, said embodiment allows to produce extracts and cocoa products, wherein the taste characteristics are not excessively dominated by the acidic flavor of the pulp, and wherein at the same time high amounts of nutritionally beneficial components originating from pulp and mucilage are contained. In a further embodiment, alone or in combination with the above embodiments, the pre-processing of the pulp/mucilage may comprise a step of separating the sugars from or concentrating the sugars in the pulp, e.g. by extraction methods or the like. Said embodiment is especially preferable if cocoa pulp is intended to be used as a natural sweetener within the cocoa product.

The unfermented cocoa beans are pre-treated in an incubation step with or without cocoa pulp and mucilage prior to step (a). Such an incubation step is characterized in that it inhibits the germination of cocoa beans by certain physical and/or chemical pre-treatments shortly after removal of the beans (with or without pulp and mucilage) from the pods.

In particular, it is possible to inhibit germination of cocoa beans by incubating freshly harvested cocoa beans at an elevated temperature, e.g. at a temperature of between 10 and 70 °C, preferably at a temperature of between 10 and 55°C for a period of between 2 hours and 10 days, preferably between 3 and 168 hours, in an incubation medium. As will be known to the skilled artisan, it is particularly preferable to transfer the cocoa beans (optionally together with the pulp/mucilage) to the incubation medium immediately after opening the pod, preferably under sterile conditions, in order to suppress spontaneous fermentation as effectively as possible.

The incubation medium is not specifically limited and may be an aqueous acidic medium, as is e.g. used in the cocoa bean processing method disclosed in US 8,501256 B2, or an aqueous ethanol solution, for example.

In conventional cocoa bean processing methods, using an aqueous acidic medium as incubation medium may be disadvantageous in that substantial amounts of the acid used (usually inorganic or organic acids with preference for amphiphilic acids, while acetic acid is especially preferred since it has been shown to effectively penetrate the cocoa beans and pervade biological membranes) remain in the bean, which have to be subsequently removed by thermal treatment or alkalization, or otherwise result in a sour and/or bitter flavor in the final product. Furthermore, spontaneous microbial activities occurring under non-sterile conditions may further contribute to formation of acetic acid. The method of the present invention has the advantage that such acid residues may be effectively dealt with by removing the acid via the water phase obtained in step (c) by neutralization, distillation, extraction, emulsion-type liquid membrane processes, salting out or combinations thereof, without the necessity to increase the thermal load upon the cocoa solids or to treat the cocoa solids via alkalization, so that a favorably high amount nutritionally beneficial components may be preserved and a pleasant, non-bitter or non-acidic taste may be achieved.

In a preferred embodiment, the incubation medium is an aqueous ethanol solution, wherein the unfermented cocoa beans are incubated at a temperature of between 10°C and 70°C, preferably at a temperature of between 10 and 55° for a period of between 2 hours and 10 days, preferably between 3 hours and 96 hours, wherein the volume of the aqueous ethanol solution is sufficient to cover the cocoa beans. Such an incubation step is advantageous in that it represents a simple, reproducible and controllable alternative to microbial (i.e. yeast and bacterial) fermentation, while at the same time a pleasant cocoa flavor and taste profile may be achieved. Although not being particularly limited as long as the concentration of ethanol is sufficiently high to prevent spontaneous fermentation by endogenous microbes, the concentration of ethanol in the incubation medium may be from 1 to 90 vol.-%, preferably between 1 and 12 vol.-%. In an especially preferred embodiment from the viewpoint of germination inhibition efficiency and processing costs, the concentration of ethanol in the incubation medium is at least 2 vol.-% and less than 7 vol.-%.

The incubation medium may further comprise enzymes known in the art for controlled enzyme-catalyzed reactions in order to facilitate formation of aroma precursors, such as hydrophilic oligopeptides and hydrophobic free amino acids, for example.

The incubation may be carried out in a single step or in multiple incubation steps, wherein different incubation conditions and/or incubation media are employed. As will be known to the skilled artisan, the incubation conditions, such as pH or temperature, may be varied within one single incubation step.

The incubation step may further encompass one or more mechanical and/or physical treatment steps commonly known in the art before or during the incubation. Although not being limited thereto, such a mechanical treatment may comprise stirring, mixing and agitating, and combinations thereof, while said physical treatment may comprise an infra-red treatment and/or a vacuum treatment, for example.

In case the unfermented cocoa beans have been incubated in accordance to any of the above-defined steps, the cocoa beans may be removed from the incubation medium and subjected to step (a) or subjected to step (a) with the incubation medium.

The unfermented cocoa beans used for step (a) have not been predried which is especially advantageous in terms of processing costs due to the lower energy expenditure.

As a starting material for step (a), whole unfermented cocoa beans that may have been incubated may be used, or unfermented cocoa beans which are subsequently subjected to a "breaking" step during which the beans are broken into smaller, non-whole bean particles (e.g., cocoa nibs).

The subject cocoa processing technique generally begins in step (a) with forming a suspension of unfermented cocoa beans by adding water, either prior or during the grinding of the cocoa beans/nibs.

Water is added to form the cocoa bean suspension. While not being particularly limited, the weight ratio of water to cocoa beans/nibs in the formed suspension is preferably between 1:1 to 6:1, more preferably 2:1 to 4:1, especially preferably about 3:1, which may advantageously affect the processability in the further steps (e.g. facilitated pumping, grinding and easier phase separation).

If desirable from the viewpoint of introducing additional flavors, alternative water-containing liquids may also be used as a source of water, preferably liquids selected from one or more of coffee, tea and liquids having water contents of from 60 to about 95 % by weight, such as fruit juices, fruit juice concentrates, or milk, for example. In a preferred embodiment, cocoa pulp and mucilage, which may have accompanied the unfermented cocoa beans and nibs during the previous steps; which may have been separated from the beans, processed in accordance to the abovementioned method and re-added to the beans prior to step (a); or which may have been obtained otherwise, is used as an additional source of water, either alone or in combination with any water-containing liquids mentioned above. In case such water-containing liquids are used, it is generally preferable that the water content in the formed suspension falls into the above-defined ratios. Since the thermal load in the further method steps is relatively low, temperature-sensitive flavors originating from said liquids are retained and may favorably interact with the primary and secondary flavors of the cocoa bean.

In order to obtain coffee-flavored cocoa products, coffee beans (whole or broken, unroasted or roasted) may be mixed to the unfermented cocoa beans/nibs when forming the suspension in water, provided that the cocoa beans/nibs form the major part in the bean mixture so that the content of coffee beans does not interfere or negatively affect the wet milling and phase separation steps. Preferably, the coffee bean content is less than 20% by weight of the bean mixture, more preferably less than 10% by weight.

In step (b), the unfermented cocoa beans/nibs are subjected to a single or multiple wet grinding step(s), which result in bean particle sizes of preferably 50 µm or smaller, more preferably 40 µm or smaller, even more preferably 20 µm or smaller. Reducing the bean particles to such a size range substantially increases the exposed surface area of the bean particle material therefore allowing it to be more efficiently wet (e.g., with water rather than a chemical solvent) for improved extraction results (such as improved extraction of fats or lipids, aromatic substances, and/or polyphenols). The bean particle size reduction may be accomplished by using disc mills (e.g. perforated disc mill), colloid mills (e.g. toothed colloid mills), or corundum stone mills, for example. It is preferable that in at least one grinding step, cocoa bean cells are macerated to enable the solvent (water) to wet the cocoa bean material better due to increased available surface area of the macerated cocoa beans. The methods and devices used for wet milling are not particularly limited as long as undesirable emulsification by significant frictional heat production or high mechanical forces is avoided. For example, when using multiple grinding steps, a coarse wet grinding step (e.g., optionally with further water) may be carried out using a perforated disc mill, and the coarsely milled suspension may be pumped to a toothed colloid mill for a fine grinding step.

After the wet grinding step (b), the suspension is subjected in step (c) to a thermal treatment at a temperature of no more than approximately 70°C in order to reduce the overall thermal load and prevent emulsification. In a preferred embodiment, previously separated cocoa pulp and mucilage (unprocessed or processed separately from the unfermented cocoa beans) is added to the suspension before step (c), so that it may contribute to the development of secondary flavors during Maillard reactions occurring at elevated temperatures. From the viewpoint of a favorable balance of cocoa butter yield and preservation of desirable flavors, such as aromatics, anti-oxidants and/or vitamins, heating temperatures of from 43 to 65°C are preferable. In terms of cocoa butter liquefaction and/or improved mechanical phase separation, a heating temperature range of from 45 to 50°C is particularly preferable. Without being limited thereto, heating of the wet-milled suspension may be carried out by a scrap or tube heat exchanger.

Thereafter, phase separation is carried out in step (d) so that three phases, i.e. a water phase (heavy phase), a fat phase (light phase) and a solid phase are obtained, said fat phase comprising cocoa butter as a major component and solids and/or water as minor components and said solid phase comprising cocoa powder and water. Preferably, devices employing centrifugal forces may be utilized to achieve mechanical particle separations, such as decanters or nozzle separators. For instance, the suspension may be decanted to separate coarse or large or high mass solids from liquid(s) and then smaller and/or fine solid particles may be further separated from liquids and/or oil products may be separated from non-oil products.

Multiple phase separation and recombination steps may be employed to achieve an improved separation between the water phase (heavy phase), the fat phase (light phase) and the solid phase. For example, the fat phase obtained by an initial decanting step may be further filtered or centrifuged to separate remaining fine particles or water from the fat phase and the thus obtained fine particles and water may be recombined with the water and solid phases from the initial decanting step or at a later processing stage of said phases. Also, the water phase may be subjected to further purification steps, e.g. by filtration using vacuum rotation filters in order to remove fine particles and reduce cloudiness of the liquid.

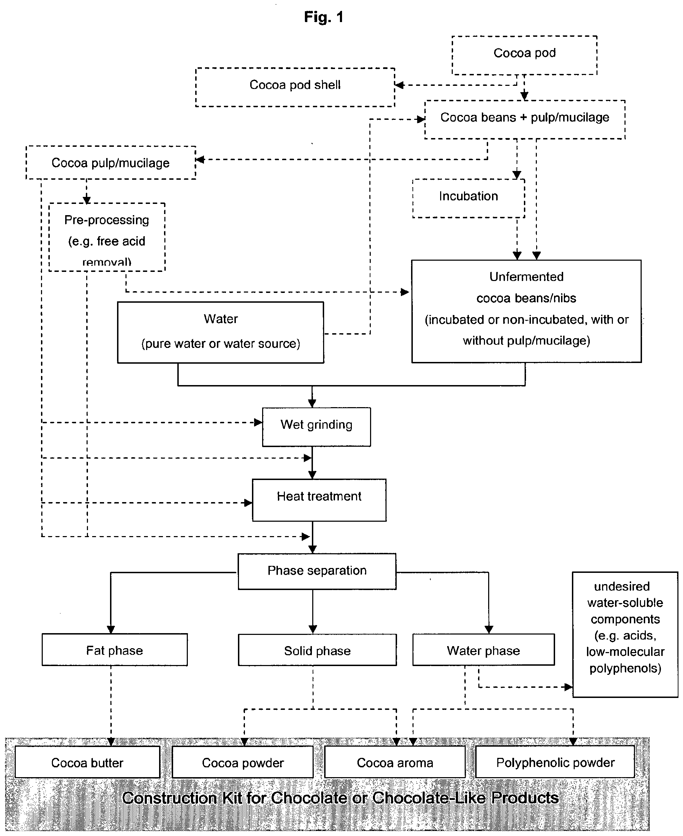

Upon separation of the three phases (i.e. the water phase (heavy phase), the fat phase (light phase) and the solid phase), these may be independently processed to separate cocoa butter (from the fat phase), cocoa powder (from the solid phase), cocoa aroma (from at least the water phase, optionally also from the solid phase) and a polyphenolic concentrate (from the water phase), as is illustrated by Fig. 1.

As indicated above, the fat phase (light phase) may be filtered (e.g. by employing a vibrating screen) and/or conveyed to a 3-phase separator (e.g. centrifuge) to remove fine particles (which may be optionally added to the solid phase prior or during the drying/roasting step) and residue water (which may be optionally added to the water phase prior to aroma recovery). Cocoa butter is obtained by filtering the purified fat phase.

The (wet) solid phase obtained after separation in the three phases may be optionally treated with a heatable roll grinder to reduce particle size and begin pre-drying. Also, sugar, sugar solution and/or fruit juices may optionally be added to separated cocoa solids before drying to improve flavor development during the drying/roasting process.

The solid phase obtained after separation in the three phases may be gently dried and simultaneously roasted at a temperature of between 55 and 100°C, from the viewpoint of reducing the thermal load and preserving the health-inducing components preferably at a temperature selected from between 55 and 70°C under reduced pressure, in order to allow roasted flavors and other aromatics to be collected. If desired, said flavors and other aromatics may be added to the cocoa butter or to the aroma recovery step of the water phase in the further progress of the cocoa bean processing method.

The method of carrying out the drying/roasting is not particularly limited and may e.g. be accomplished in a drum dryer.

In a preferred embodiment, the drying/roasting step is carried out in a mixing device as is disclosed in EP 0 711 505 A1 for chocolate conching. Said mixing device comprises a cylindrical, tubular body arranged with its axis horizontal and closed at its opposite ends by end plates, and having a coaxial heating or cooling jacket through which, for example, diathermic oil or another fluid is intended to flow to keep the internal wall of the body at a predetermined temperature. The tubular body has an inlet and outlet openings for the solid phase. The outlet opening communicates, by means of a duct, with a device for separating the aroma phase from the dried product. The device further comprises a bladed rotor is supported for rotation in the tubular body, its blades being arranged as a helix and oriented for centrifuging the solid phase being processed and simultaneously transporting it towards the outlet opening. Using this mixing device advantageously allows the drying/roasting step and the separation of the roasted flavors and other aromatics to be carried out continuously and also remarkably accelerates the processing of unfermented cocoa beans/nibs up to the preparation of the cocoa powder (dry cocoa matter), resulting in processing durations of less than 20 minutes, typically less than 15 minutes.

In the above-described cocoa bean/nib processing methods, acidic components, such as e.g. acetic acid formed or added prior to or during an incubation of the cocoa beans, or citric acid originating from cocoa pulp and mucilage will be found in the water phase and may thus be conveniently neutralized and/or removed by treating the water phase appropriately upon phase separation.

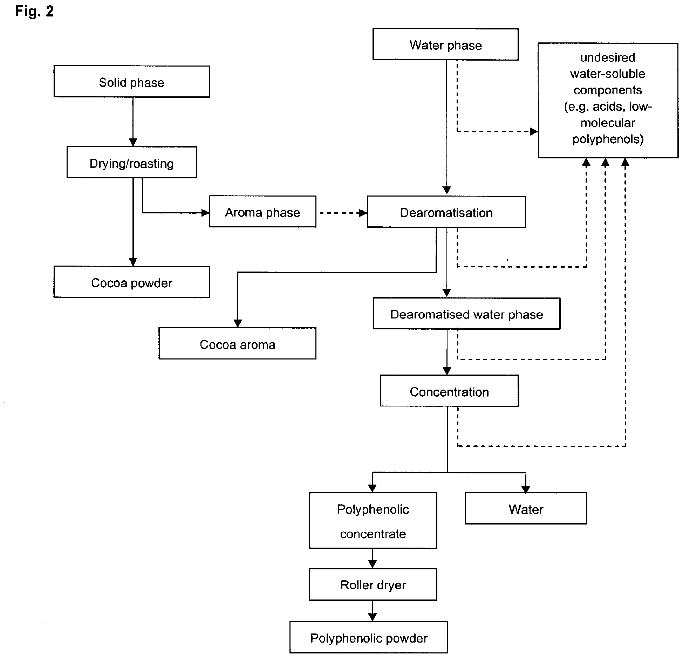

The method of removing free acid via the water phase is not particularly limited and may be carried out by any suitable method known in the art. For example, acetic acid may be removed from the water phase by e.g. distillation (e.g. extractive distillation or reactive distillation), extraction (e.g. liquid-liquid) extraction, emulsion-type liquid membrane processes, salting out or combinations thereof. Alternatively, acid may remain in the water phase if cocoa aroma and polyphenolic powder are selectively extracted therefrom. As is illustrated in Fig. 2, free acid and other undesired water-soluble components, such as astringency-inducing and/or bitter low-molecular polyphenols may be removed from the water phase prior to or during the dearomatisation step, and/or prior to or during the concentration step.

The neutralization and/or removal of free acid via the water phase has significant advantages over the methods disclosed in prior art, a few of which will be discussed in the following:
Acid is extracted from the cocoa beans or nibs via the water phase prior to subjecting the solid phase to a drying/roasting step. Therefore, prolonged drying/roasting and high thermal loads upon the fermented cocoa beans are not required in order to evaporate acid, whereby high contents of aromatic flavors, anti-oxidants, vitamins may be preserved. Also, the duration of the conching process may be significantly reduced.

Furthermore, since the relatively high costs involved with the use of water and its removal are far outweighed by energy savings due to heating at lower temperatures and accelerated drying/roasting and conching steps, the method according to the present invention also involves economic advantages when compared to conventional methods for the preparation of chocolate or chocolate-like products.

In addition, in contrast to conventional cocoa product manufacturing, cocoa beans having relatively high acid contents and/or being in varying fermentation stages may be used to produce high-quality cocoa products, such as chocolate.

A remarkable advantage of the present invention is that undesired hydrophilic components (such as bitter and/or astringent low molecular polyphenols (e.g. catechins)) may likewise be removed via the water phase. Thus, undesired levels of astringency and bitterness commonly associated with cocoa products made from unfermented cocoa beans may be easily avoided, even in cases where roasting of the unfermented cocoa beans is entirely omitted.

It has further been found that the water phase obtained in the decanting step also contains desired flavors, which may be recovered by subjecting the water phase to a first concentration step to obtain aromatics. Additionally, enhancement of cocoa flavors may be achieved using reverse flow distillation (i.e., to separate flavor compounds and water).

In an optional second concentration phase, evaporation of excessive water may performed to obtain polyphenolic powder.

Removal of undesired water may be achieved using evaporation techniques which, when employed, can desirably, result in water suspended flavor compounds. Moreover, concentrated polyphenols may result. In yet still further embodiments, recovered cocoa flavors may be enhanced by reverse flow distillation (e.g., to separate flavor components from water), which is preferably carried out under low pressure (less than 300 mbar) and room temperature in order to minimize the thermal load.

In general, if there is microorganism spoilage of cocoa extracted materials (i.e. cocoa butter, cocoa powder, cocoa aroma and polyphenolic concentrate), such material can be deodorized employing a vacuum de-aerator. Moreover, if microorganism contamination occurs, a high pressure treatment such as pascalisation is possible (e.g., which is desirable because it can preserve aromatic compounds). However, if both microorganism spoilage and contamination occurs, heat treatment and deodorization may be employed. Advantageously, the method according to the present invention allows a fast processing of the cocoa beans/nibs, so that growth of microorganisms may be kept at a minimum, however.

Using the herein described technique(s), unfermented cocoa beans may be efficiently processed to produce desirable, commercially valuable yields of dried and extracted cocoa powder, cocoa butter with hydrophobic cocoa flavor, hydrophilic cocoa flavor, and polyphenol concentrates. Moreover, certain resultant cocoa products retain or contain desirable levels of anti-oxidants and/or vitamins and/or possess more desirable (e.g., less bitter) flavors which, in turn, do not require sugar additions (or, at least, high levels or sugar additions) when used in food stuffs.

### Construction Kit for Chocolate or Chocolate-Like Products

In the following, a construction kit for chocolate or chocolate-like products including a plurality of cocoa bean extraction products produced in accordance with method steps set forth in the first embodiment outlined above will be described. A cocoa product construction kit preferably comprises at least two of the polyphenolic powder, cocoa powder, cocoa butter and cocoa aroma extracts obtained by the cocoa bean processing methods as described above. A cocoa product construction kit may comprise all of the abovementioned extracts.

The term "chocolate-like product", as used herein, refers to a product which falls into the legal definition of a "chocolate" of at least one country, but not all countries, since it deviates in the type and/or the content range of a component legally defining chocolate. The use of cocoa pulp/mucilage for the manufacture of chocolate may, for example, lead to a deviation from the definition of "chocolate" under certain national regulations.

The construction kit for chocolate and chocolate-like products according advantageously provides starting materials for a large variety of high-quality cocoa-based products, wherein water-soluble undesired hydrophilic components (such as bitter and/or astringent low molecular polyphenols (e.g. catechins)) have been removed while retaining high contents of water-soluble aroma components, polyphenolic components and vitamins of the cocoa beans/nibs and preserving high concentrations thereof due to the low thermal burden.

Hence, it is possible to manufacture many variants of nutritionally valuable and tasty chocolate and chocolate-like products, wherein the typical characteristics of the origin, variety and vintage of cocoa bean - especially the primary flavors thereof - are perceptible, without unpleasant acidity, astringency or bitterness.

Exemplary methods of manufacturing chocolate and chocolate-like products, on the basis of the construction kit, or the extracts obtained in the method according to the first embodiment, respectively, will be given hereinbelow.

### Methods for Manufacturing Chocolate or Chocolate-Like Products

The plurality of cocoa bean extraction products produced in accordance with method steps set forth in the first embodiment may be used for the preparation of a large variety of chocolate products, as will be described in the following third embodiment.

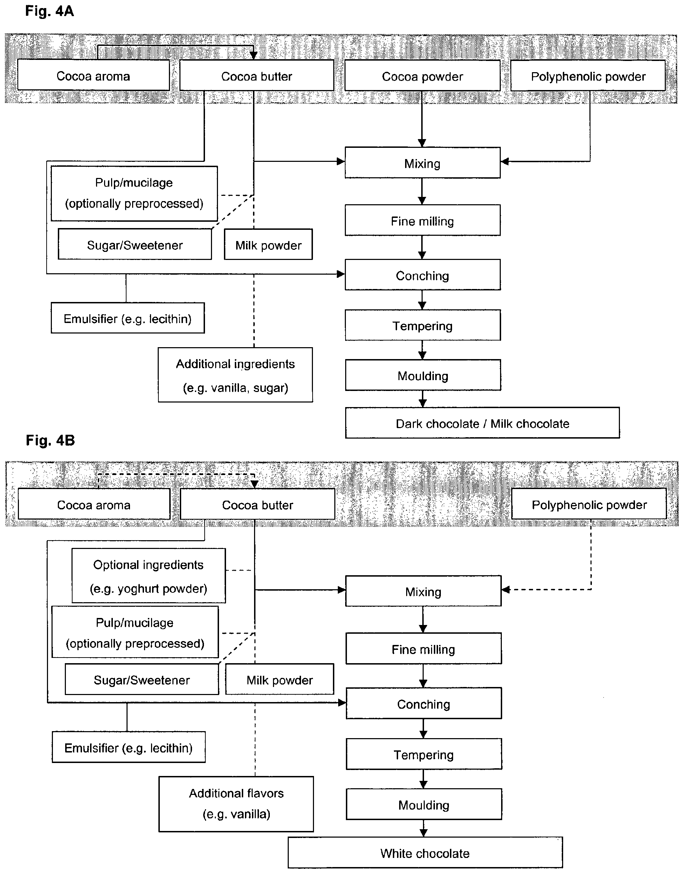

Fig. 4A illustrates an example of a method for the preparation of dark chocolate and milk chocolate, wherein the cocoa aroma extracts obtained from dearomatisation of the water phase and/or optionally the roasted cocoa aroma obtained from the drying/roasting step (as indicated in Fig. 2) are first added to the cocoa butter. Before being subjected to a conching step, the dried and roasted solid cocoa powder is mixed with cocoa butter with added aroma and fine milled. Polyphenolic powder may be added to the mixture as desired to provide more intense flavors and higher contents of anti-oxidants in the final product. Additional tailoring of flavor or development of flavor may be performed by adding one or more of sugar, sweetener, cocoa pulp and/or fruit juices. In a preferred embodiment, the pre-processed or unprocessed pulp/mucilage described in further detail above is added as a natural sweetener. For the preparation of milk chocolate, milk powder is further added, preferably prior to the mixing step. Optionally, an emulsifying agent (e.g. lecithin) may be added prior to conching to reduce viscosity, control sugar crystallization and the flow properties of chocolate, and help in the homogeneous mixing of ingredients. Also, additional ingredients and flavors, such as e.g. vanilla, rum and so on may be added prior to or during the conching step.

The conching process redistributes into the fat phase the substances from the dry cocoa that create flavor, while removing unwanted acetic, propionic, and butyric acids from the chocolate, reducing moisture, and mellowing the flavor of the product. The temperature of the conche is controlled and varies depending on the different types of chocolate (from around 49 °C for milk chocolate to up to 82 °C for dark chocolate). While being to some degree dependent on the temperature, the conching duration in conventional chocolate manufacturing processes generally ranges from 16 up to 72 hours in order to achieve good results. In the method according to the present invention, the conching duration is preferably less than 16 hours, more preferably less than 12 hours, typically 10 hours or less. Thus, a loss of desirable aroma characteristics as observed at long conching times does not occur.

As alternative chocolate product that may be manufactured by the method of producing chocolate according to the present invention as indicated in Fig. 4B, white chocolate may be mentioned, which is usually a blend of cocoa butter, sugar, milk solids, emulsifier (e.g. lecithin), as well as optionally vanilla for flavor, depending on the producer's recipe. In a preferred embodiment, the pre-processed or unprocessed pulp/mucilage described in further detail above is added as a natural sweetener instead of sugars.

Conventional methods for the production of white chocolate involve the use of deodorized cocoa butter. Specifically, cocoa butter is conventionally prepared by methods comprising the alkalization of cocoa liquor, which contributes to high contents of bitter flavor components in the cocoa butter that have to be removed, which may be achieved by means of extraction with organic solvents or steam injection to provide a low-odor, non-bitter and flavorless cocoa butter basis for the further preparation of white chocolate. However, such processes are known to involve a reduction of the contents of vitamins and anti-oxidants in the cocoa butter.

Advantageously, using the herein described techniques, cocoa butter with less bitter flavors may be obtained, so that only gentle cocoa butter processing, if any, is required in order to render it usable for the production of white chocolate, also leading to a preservation of larger contents of desirable components such as vitamins or anti-oxidants.

In addition, by recombining of the cocoa butter with the cocoa aromas and/or roasted cocoa aroma and/or the polyphenolic powder as obtained by the method of the first embodiment according to the desired taste allows to produce a white chocolate having a characteristic and distinct cocoa flavor.

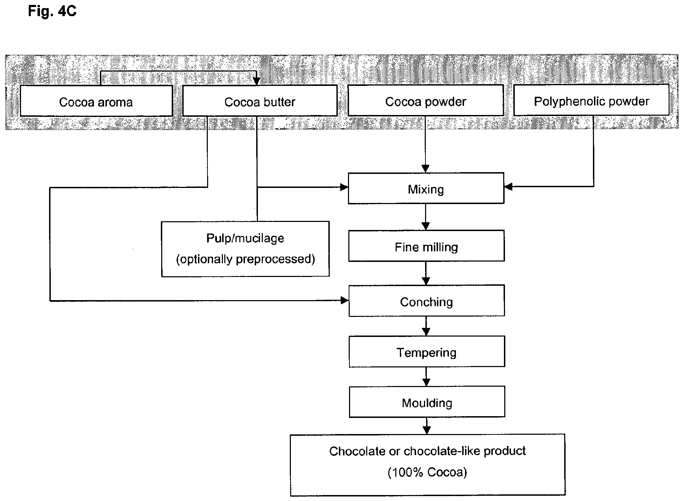

A process of manufacturing a chocolate or chocolate-like product having a cocoa content of 100% is schematically described in Fig. 4C. The scheme basically corresponds that of Fig. 4A, with the exception that all ingredients exclusively originate from the cocoa fruit. By the processes described above, it is possible to manufacture a 100% cocoa product, wherein - unlike known similar products - undesired astringency and bitterness commonly associated with cocoa products made from unfermented cocoa beans is avoided and wherein at the same time favorably high amounts of nutritionally beneficial and valuable components of the unfermented cocoa fruit, such as e.g. polyphenols, antioxidants, vitamins are contained. Last but not least, the final product also makes use of cocoa pulp and comprises valuable nutritional and health-inducing ingredients originating therefrom, such as polyphenols, antioxidants, vitamins and/or sugars. Also, overly acidic flavour notes originating from the pulp may be reduced as desired via pre-processing of the pulp or via removal of acidic components through the water phase.

In general, the chocolate or chocolate-like products obtained by the methods of the present invention may take any suitable form and may, for example, be packaged and sold as a block or a bar, be filled and may be used as a coating, be used in other confectionery and bakery applications (e.g. as a cake coating or filling, a biscuit coating or filling, a sponge coating or filling or a coating layer for an ice cream). Also, the obtained chocolate or chocolate-like products may optionally have further additives added prior to the final use of the product.

Once given the above disclosure, many other features, modifications, and improvements will become apparent to the skilled artisan.

## Claims

1. A method for processing unfermented cocoa beans, comprising the steps of:
(a) adding water to said unfermented cocoa beans with or without cocoa pulp and mucilage to form a suspension;
(b) wet grinding said suspension;
(c) subjecting said suspension to a heat treatment at a temperature of 70°C or less;
(d) separating the suspension into a water phase (heavy phase), a fat phase (light phase) and a solid phase, said fat phase comprising cocoa butter as a major component and solids and/or water as minor components and said solid phase comprising cocoa powder and water; and
(e) separately processing the three phases, which optionally comprises:
separating cocoa butter from the fat phase,
separating cocoa powder from the solid phase, and
separating cocoa aroma and a polyphenolic powder from at least the water phase;
wherein said unfermented cocoa beans are not predried; and
wherein said unfermented cocoa beans have been subjected to an incubation step prior to step (a).

2. The method according to claim 1 wherein the incubation step comprises adding unfermented cocoa beans to an ethanolic solution at a temperature of between 10°C and 70°C for a period of between 2 hours and 10 days, the volume of the ethanolic solution being sufficient to cover the cocoa beans.

3. The method according to claim 2, wherein the ethanol concentration in the ethanolic solution is at least 1 vol.-% and less than 7 vol.-%.

4. The method according to any of the preceding claims, wherein said unfermented cocoa beans are not depulped.

5. The method according to any of claims 1 to 4, further comprising a step of depulping the unfermented cocoa beans prior to step (a).

6. The method according to claim 5, wherein the cocoa pulp and mucilage obtained in the depulping step is processed separately from the unfermented cocoa beans and subsequently added to the suspension before or during steps (a), (b), (c) or (d).

7. The method according to claim 6, wherein the processing of the cocoa pulp and mucilage comprises neutralizing and/or removing acidic components.

8. The method according to any of the preceding claims, wherein cocoa aroma and polyphenolic powder are extracted from the water phase and the solid phase.

9. The method according to any of the preceding claims, wherein each of said cocoa processing steps are performed at temperatures of no more than approximately 70°C.

10. A method for producing chocolate or chocolate-like products comprising the steps of:
(a) adding water to unfermented cocoa beans to form a suspension;
(b) wet grinding said suspension;
(c) subjecting said suspension to a heat treatment at a temperature of 70°C or less;
(d) separating the suspension into three phases, i.e. a water phase (heavy phase), a fat phase (light phase) and a solid phase, said fat phase comprising cocoa butter as a major component and solids and/or water as minor components and said solid phase comprising cocoa powder and water; and
(e) separately processing the three phases, which comprises:
separating cocoa butter from the fat phase,
separating cocoa powder from the solid phase, and
separating cocoa aroma and a polyphenolic powder from at least the water phase;
(f) recombining the cocoa aroma extract with the cocoa butter extract;
(g) mixing the recombined extracts with said cocoa powder extract, said polyphenolic powder extract and/or milk powder; and
(h) conching said mixture;
wherein said unfermented cocoa beans are not predried; and
wherein said unfermented cocoa beans have been subjected to an incubation step prior to step (a).

11. The method according to claim 10, further comprising a step of depulping the unfermented cocoa beans prior to step (a), optionally processing the cocoa pulp and mucilage obtained in the depulping step separately from the unfermented cocoa beans, and subsequently adding the cocoa pulp either to the suspension before or during steps (a), (b), (c) or (d), or before or during steps (f), (g) and (h).

## Patentansprüche

1. Verfahren zur Verarbeitung unfermentierter Kakaobohnen, umfassend die Schritte:
(a) Zugabe von Wasser zu unfermentierten Kakaobohnen mit oder ohne Kakaopulpe und Schleimstoffen, um eine Suspension zu bilden;
(b) Nassvermahlung der Suspension;
(c) Wärmebehandlung der Suspension bei einer Temperatur von 70 ° C oder weniger;
(d) Separation der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält, und wobei die feste Phase Kakaopulver und Wasser umfasst; und
e) separate Verarbeitung der drei Phasen, welche optional eine Abtrennung der Kakaobutter von der Fettphase, eine Abtrennung von Kakaopulver von der festen Phase, und eine Abtrennung von Kakaoaroma und einem Polyphenolpulver von mindestens der Wasserphase umfasst;
wobei die unfermentierten Kakaobohnen nicht vorgetrocknet sind; und
wobei die unfermentierten Kakaobohnen vor dem Schritt (a) einem Inkubationsschritt unterworfen wurden.

2. Verfahren nach Anspruch 1, wobei der Inkubationsschritt die Zugabe unfermentierter Kakaobohnen zu einer ethanolischen Lösung bei einer Temperatur zwischen 10°C und 70°C für einen Zeitraum zwischen 2 Stunden und 10 Tagen umfasst, wobei das Volumen der ethanolischen Lösung ausreichend ist, um die Kakaobohnen zu bedecken.

3. Verfahren nach Anspruch 2, wobei die Ethanolkonzentration in der ethanolischen Lösung mindestens 1 Vol.-% und weniger als 7 Vol.-% beträgt.

4. Verfahren nach einem der vorhergehenden Ansprüche, wobei die unfermentierten Kakaobohnen nicht entfleischt werden.

5. Verfahren nach einem der Ansprüche 1 bis 4, wobei die unfermentierten Kakaobohnen vor dem Schritt (a) entfleischt werden.

6. Verfahren nach Anspruch 5, **dadurch gekennzeichnet, dass** die im Entfleischungsschritt erhaltenen Kakaopulpe und Schleimstoffe getrennt von den unfermentierten Kakaobohnen verarbeitet und anschließend vor oder während der Schritte (a), (b), (c) oder (d) zur Suspension hinzugefügt werden.

7. Verfahren nach Anspruch 6, wobei das Verarbeiten der Kakaomasse und der Schleimstoffe das Neutralisieren und/oder Entfernen von sauren Bestandteilen umfasst.

8. Verfahren nach einem der vorhergehenden Ansprüche, wobei Kakaoaroma und Polyphenolpulver aus der Wasserphase und der festen Phase extrahiert werden.

9. Verfahren nach einem der vorhergehenden Ansprüche, wobei jeder der Kakaoverarbeitungsschritte bei Temperaturen von nicht mehr als ungefähr 70 ° C durchgeführt wird.

10. Verfahren zur Herstellung von Schokolade oder schokoladenähnlichen Produkten, umfassend die Schritte:
(a) Zugabe von Wasser zu unfermentierten Kakaobohnen, um eine Suspension zu bilden;
(b) Nassvermahlung der Suspension;
(c) Wärmebehandlung der Suspension bei einer Temperatur von 70 ° C oder weniger;
(d) Separation der Suspension in drei Phasen, d.h. eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält, und wobei die feste Phase Kakaopulver und Wasser umfasst; und
(e) separate Verarbeitung der drei Phasen, welche optional eine Abtrennung der Kakaobutter von der Fettphase, eine Abtrennung von Kakaopulver von der festen Phase, und eine Abtrennung von Kakaoaroma und einem Polyphenolpulver von mindestens der Wasserphase umfasst;
(f) Rekombination des Kakaoaromaextrakts mit dem Kakaobutterextrakt;
(g) Vermischen der rekombinierten Extrakte mit dem Kakaopulverextrakt, dem Polyphenolpulverextrakt und/oder Milchpulver; und
(h) Conchieren der Mischung;
wobei die unfermentierten Kakaobohnen nicht vorgetrocknet sind; und
wobei die unfermentierten Kakaobohnen vor dem Schritt (a) einem Inkubationsschritt unterworfen wurden.

11. Verfahren nach Anspruch 10, ferner umfassend einen Entfleischungsschritt der unfermentierten Kakaobohnen vor dem Schritt (a), optional eine von den unfermentierten Kakaobohnen getrennte Verarbeitung der im Entfleischungsschritt erhaltenen Kakaopulpe und Schleimstoffe, und anschließender Zugabe der Kakaopulpe zur Suspension, entweder vor oder während der Schritte (a), (b), (c) oder (d) oder vor oder während der Schritte (f), (g) und (h).

## Revendications

1. Procédé de traitement de fèves de cacao non fermentées comprenant les étapes consistant à:
(a) ajouter de l'eau auxdites fèves de cacao non fermentées avec ou sans pulpe de cacao et mucilage pour former une suspension;
(b) broyer ladite suspension sous arrosage;
(c) soumettre ladite suspension à un traitement thermique à une température inférieure ou égale à 70°C;
(d) séparer la suspension en une phase aqueuse (phase lourde), une phase grasse (phase légère) et une phase solide, ladite phase grasse comprenant du beurre de cacao comme composant majeur et des solides et/ou de l'eau comme composants mineurs et ladite phase solide comprenant de la poudre de cacao et de l'eau; et
(e) traiter séparément les trois phases, ce qui consiste éventuellement à:
séparer le beurre de cacao de la phase grasse,
séparer la poudre de cacao de la phase solide, et
séparer l'arôme de cacao et une poudre polyphénolique d'au moins la phase aqueuse;
dans lequel lesdites fèves de cacao non fermentées ne sont pas pré-séchées; et
dans lequel lesdites fèves de cacao non fermentées ont été soumises à une étape d'incubation avant l'étape (a).

2. Procédé selon la revendication 1 dans lequel l'étape d'incubation consiste à ajouter les fèves de cacao non fermentées à une solution éthanolique à une température comprise entre 10°C et 70°C pendant une durée comprise entre 2 heures et 10 jours, le volume de la solution éthanolique étant suffisant pour recouvrir les fèves de cacao.

3. Procédé selon la revendication 2, dans lequel la concentration d'éthanol dans la solution éthanolique est d'au moins 1 % en volume et inférieure à 7 % en volume.

4. Procédé selon l'une quelconque des revendications précédentes, dans lequel lesdites fèves de cacao non fermentées ne sont pas dépulpées.

5. Procédé selon l'une quelconque des revendications 1 à 4, comprenant en outre une étape de dépulpage des fèves de cacao non fermentées avant l'étape (a).

6. Procédé selon la revendication 5, dans lequel la pulpe de cacao et le mucilage obtenus dans l'étape de dépulpage est traitée séparément à partir des fèves de cacao non fermentées et par la suite ajoutée à la suspension avant ou pendant les étapes (a), (b), (c) ou (d).

7. Procédé selon la revendication 6, dans lequel le traitement de la pulpe de cacao et le mucilage comprennent la neutralisation et/ou l'élimination des composants acides.

8. Procédé selon l'une quelconque des revendications précédentes, dans lequel l'arôme de cacao et les poudres polyphénoliques sont extraits de la phase aqueuse et de la phase solide.

9. Procédé selon l'une quelconque des revendications précédentes, dans lequel chacune desdites étapes de traitement de cacao sont effectuées à des températures ne dépassant pas environ 70°C.

10. Procédé de production de chocolat ou de produits similaires au chocolat comprenant les étapes consistant à:
(a) ajouter de l'eau à des fèves de cacao non fermentées pour former une suspension;
(b) broyer ladite suspension sous arrosage;
(c) soumettre ladite suspension à un traitement thermique à une température inférieure ou égale à 70°C;
(d) séparer la suspension en trois phases, soit une phase aqueuse (phase lourde), une phase grasse (phase légère) et une phase solide, ladite phase grasse comprenant du beurre de cacao comme composant majeur et des solides et/ou de l'eau comme composants mineurs et ladite phase solide comprenant de la poudre de cacao et de l'eau; et
(e) traiter séparément les trois phases, ce qui consiste éventuellement à:
séparer le beurre de cacao de la phase grasse, séparer la poudre de cacao de la phase solide, et
séparer l'arôme de cacao et une poudre polyphénolique d'au moins la phase aqueuse;
(f) recombiner l'extrait d'arôme de cacao avec l'extrait de beurre de cacao;
(g) mélanger les extraits recombinées avec ledit extrait de poudre de cacao, ledit extrait de poudre polyphénolique et/ou ledit lait en poudre; et
(h) concher ledit mélange;
dans lequel lesdites fèves de cacao non fermentées ne sont pas pré-séchées; et
dans lequel lesdites fèves de cacao non fermentées ont été soumises à une étape d'incubation avant l'étape (a).

11. Procédé selon la revendication 10, comprenant en outre une étape de dépulpage des fèves de cacao non fermentées avant l'étape (a), de traitement éventuel de la pulpe de cacao et du mucilage obtenus lors de l'étape de dépulpage séparément à partir des fèves de cacao non fermentées, et en ajoutant ensuite la pulpe de cacao soit à la suspension avant ou pendant les étapes (a), (b), (c) ou (d), ou avant ou pendant les étapes (f), (g) et (h).
